# EUROPÄISCHE PATENTSCHRIFT

(11) **EP 0 421 057 B1**
(45) Veröffentlichungstag und Bekanntmachung des Hinweises auf die Patenterteilung: **07.04.1993**
(21) Anmeldenummer: 90110642.7
(22) Anmeldetag: 05.06.1990
(51) Int. Cl.: F16B 21/16

(54) **Befestigungselement aus Kunststoff**
Plastic fastening device
Dispositif de fixation en matière plastique

(30) Priorität: 05.10.1989 DE 3933301
(43) Veröffentlichungstag der Anmeldung: 10.04.1991
(73) Patentinhaber: TRW United-Carr GmbH & Co. KG, D-67677 Enkenbach-Alsenborn (DE)
(72) Erfinder: Kraus, Willibald, D-6718 Grünstadt (DE)
(74) Vertreter: Schieschke, Klaus, Dipl.-Ing.

(56) Entgegenhaltungen:
- FR-A- 2 251 740
- GB-A- 2 070 678
- GB-A- 2 077 845
- GB-A- 2 188 976
- US-A- 4 427 328

## Beschreibung

Die Erfindung bezieht sich auf ein Befestigungselement aus Kunststoff, zum Einbau in eine im wesentlichen rechteckige Öffnung eines Trägers, mit einem Kopfteil, einem daran anschließenden, im wesentlichen im Querschnitt rechteckigen Halteteil mit lamellenförmigen Rippen auf gegenüberliegenden längeren Seiten des Halteteils, welche jeweils im Randbereich durch einen sich längs des Halteteils erstreckenden Steg begrenzt sind.

Als Stand der Technik ist bereits ein derartiges Befestigungselement bekannt, welches als sogenannter selbstzentrierender Tannenbaumclip ausgebildet ist (DE-OS 30 14 745). Hierbei schließen an den Kopfteil unmittelbar die Stege 13, 14 an, zwischen welchen sich schräg nach oben ragende lamellenförmige Rippen befinden. Es war hierbei das Problem zu lösen, daß die lamellenförmigen Rippen nur in zulässigen Grenzen beansprucht werden, wobei sie jedoch ihre Haltefunktion voll erfüllen sollen.

Die Stege bilden hierbei eine steife, starre Einheit, so daß insgesamt dieses Befestigungselement nur eine sehr geringe Elastizität besitzt und damit nicht in der Lage ist, in der Praxis auftretende Toleranzen beim Einsetzen in eine rechteckige Öffnung eines Trägers auszugleichen.

Zum Stand der Technik ist weiterhin ein sogenannter Plastikstopfen bekannt, welcher von einem massiven Schaftkern radial abstehende, flexible Lamellen aufweist, die, über den Umfang verteilt, in achsparallele Gruppen zusammengefaßt sind (DE-OS 30 40 360). Auch hier bedarf es bezüglich der in einem Träger vorhandenen rechteckigen Öffnung relativ genauer Abmessungen, um diesen Plastikstopfen funktionssicher einsetzen zu können.

Derartige Befestigungselemente werden teilweise eingesetzt, um leistenartige Gegenstände, beispielsweise Zierleisten an Kraftfahrzeugen, funktionssicher zu haltern. Hierbei weisen die entsprechend gestalteten Kopfteile längsverlaufende Bereiche auf, in welche die Leisten seitlich eingeschoben werden können (DE-AS 27 39 889, DE-GM 80 04 206, DE-OS 28 21 095).

Der vorliegenden Erfindung liegt nun die Aufgabe zugrunde, ein Befestigungselement der eingangs genannten Art so auszubilden, daß es in der Lage ist, auch bei größeren auftretenden Toleranzen und Schwankungen in den Abmessungen einer im wesentlichen rechteckigen Öffnung eines Trägers eine sichere Haltefunktion auszuüben, wobei dieses Befestigungselement hauptsächlich zur Halterung von leistenartigen Gegenständen dienen soll.

Diese Aufgabe wird erfindungsgemäß dadurch gelöst, daß die Stege jeweils als federnde Bügel ausgebildet sind, daß die Anfangsbereiche zweier, auf verschiedenen Seiten des Halteteils einander gegenüberliegender Bügel schräg zueinander angeordnet sind und in einen konisch zulaufenden Einschubbereich mit schrägen Seitenflächen übergehen und daß der Kopfteil als Halterung für einen leistenartigen Gegenstand ausgebildet ist.

Hierdurch ergibt sich der Vorteil, daß infolge des Zusammenwirkens der lamellenförmigen Rippen und der federnden, schräg verlaufenden Bügel das erfindungsgemäße Befestigungselement einwandfrei in einer im wesentlichen rechteckigen Öffnung eines Trägers befestigt werden kann, und zwar selbst dann, wenn die im wesentlichen rechteckige Öffnung des Trägers innerhalb größerer Toleranzen liegt. Das erfindungsgemäße Befestigungselement läßt sich damit vorteilhafterweise zur Halterung von leistenartigen Gegenständen, insbesondere im Kraftfahrzeugbau, verwenden, wobei diese Gegenstände beispielsweise Zierleisten sein können.

In weiterer Ausgestaltung der Erfindung können die Endbereiche der gegenüberliegenden Bügel schräg zueinander angeordnet sein, wobei die Bügel eine durchgehend gleiche Wandstärke aufweisen. Hierdurch wird vorteilhafterweise die Elastizität gewahrt und die schrägen Endbereiche der gegenüberliegenden Bügel legen sich gegen die Unterseite des mit der im wesentlichen rechteckigen Öffnung versehenen Trägers an.

Nach einem weiteren Merkmal der Erfindung kann zwischen den Rippen und Bügeln des Halteteils und der Unterseite des Hauptteils ein im wesentlichen im Querschnitt rechteckiger Zwischenbereich liegen. Hierbei können auf den gegenüberliegenden längeren Seiten des Zwischenbereichs jeweils mittig sich längs erstreckende Stege angeordnet sein, welche eine zusätzliche Sicherung und Versteifung des Zwischenbereichs bedeuten.

Der Kopfteil kann z.B. in weiterer Ausgestaltung der Erfindung aus einer sich an den Zwischenbereich anschließenden Grundplatte und einer darauf angeordneten, umgekehrt U-förmig ausgebildeten Abschlußplatte mit seitlich überstehenden Stegen bestehen, wobei die Breite der Stege vorzugsweise kleiner als die Breite der Grundplatte ist. Damit läßt sich auf einfache Weise z.B. eine entsprechend gestaltete Zierleiste an dem Kopfteil des erfindungsgemäßen Befestigungselements anbringen. Um die Halterung einer derartigen Leiste zu verbessern, kann die Grundplatte in weiterer Ausgestaltung der Erfindung im mittleren Bereich, den Stegen gegenüberliegend, mindestens eine federnde Zone aufweisen, welche einen gegen den Steg gerichteten Vorsprung, vorzugsweise in dreieckiger Form, besitzt. Dieser federnde Vorsprung drückt gegen die entsprechenden Bereiche des leistenartigen Gegenstandes und bewirkt damit eine Verbesserung bei dessen Halterung an dem Kopfteil des erfindungsgemäßen Befestigungselements.

Nach einem weiteren Merkmal der Erfindung kann zwischen den Seitenbereichen der Grundplatte und der federnde Zone mit dem dreieckigen Vorsprung jeweils ein Spalt verlaufen, wodurch die erforderliche Elastizität der federnde Zone auf einfache Weise sichergestellt ist.

Nach einem Ausführungsbeispiel der Erfindung kann die Grundplatte auf beiden Seiten, den jeweiligen Stegen gegenüberliegend, eine federnde Zone mit dreieckigem Vorsprung aufweisen. Diese Bauform ist insbesondere dann von Interesse, wenn der Kopfteil im rechten Winkel an dem Zwischenbereich und dem Halteteil angeordnet ist.

Alternativ besteht auch die Möglichkeit, daß der Kopfteil im schrägen Winkel zu dem Zwischenbereich liegt. Hierbei weist die Grundplatte vorteilhafterweise nur auf der am höchsten liegenden Seite die federnde Zone mit dreieckigem Vorsprung auf, wobei die tieferliegende Seite der Grundplatte im mittleren Bereich eine federnde, gegen die Unterseite des benachbarten Steges gerichtete Zone besitzen kann. Dadurch wird ein evtl. falscher Einbau eines mit dem erfindungsgemäßen Befestigungselements verbundenen leistenartigen Gegenstandes in einer im wesentlichen rechteckigen Öffnung eines Trägers vermieden, so daß hierdurch eine Einbauhilfe gegeben ist. An die federnde Zunge können beidseitig federnde Bereiche der Grundplatte anschließen, so daß auch durch dieses konstruktive Merkmal das erfindungsgemäße Befestigungselement einwandfrei an einem leistenartigen Gegenstand anzubringen ist.

Auf der Oberseite der Abschlußplatte des Kopfteils kann eine sich längs erstreckende Nut vorgesehen sein.

Die Erfindung wird nachfolgend anhand von in der Zeichnung dargestellten Ausführungsbeispielen näher beschrieben. In der Zeichnung zeigen:
Fig. 1 eine Vorderansicht eines Befestigungselements;
Fig. 2 eine Seitenansicht des Befestigungselements nach Fig. 1;
Fig. 3 eine weitere Ausführungsform des Befestigungselements in Vorderansicht;
Fig. 4 eine Seitenansicht des Befestigungselements nach Fig. 3.

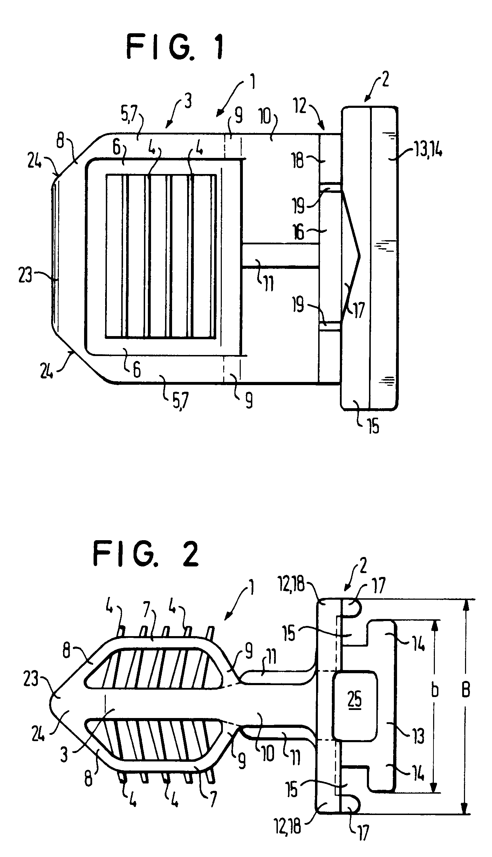

Das in Fig. 1 und 2 dargestellte Befestigungselement 1 besteht aus Kunststoff und dient zum Einbau in eine im wesentlichen rechteckige Öffnung eines Trägers. Dieses Befestigungselement weist im wesentlichen einen Kopfteil 2, einen daran anschließenden, im wesentlichen im Querschnitt rechteckigen Halteteil 3 mit lamellenförmigen Rippen 4 auf gegenüberliegenden längeren Seiten des Halteteils 3 auf. Diese Rippen 4 sind jeweils im Randbereich durch einen sich längs des Halteteils 3 erstreckenden Steg 5 unter Wahrung eines Zwischenabstandes 6 begrenzt. Es besteht auch die Möglichkeit, die Rippen 4 bis an den jeweiligen Steg 5 heranzuführen, so daß der Zwischenabstand 6 entfällt.

Wie ersichtlich, sind die Stege 5 jeweils als federnde Bügel 7 ausgebildet, wobei nach Fig. 2 die Bügel 7 eine durchgehend gleiche Wandstärke aufweisen können. Je nach Anforderung der Eindrück- bzw. Ausziehkräfte können auch verschiedene bzw. konisch zulaufende Wandstärken Anwendung finden. Die Anfangsbereiche zweier auf verschiedenen Seiten des Halteteils 3 einander gegenüberliegender Bügel 7 sind hierbei zueinander schräg angeordnet. Sie gehen in einen konisch zulaufenden Einschubbereich 23 mit schrägen Seitenflächen 24 über. Auch die Endbereiche 9 der gegenüberliegenden, federnden Bügel 7 sind schräg zueinander angeordnet und können sich beispielsweise gegen die Unterseite eines nicht näher dargestellten Trägers anlegen.

Aus Fig. 1 und 2 ist erkennbar, daß zwischen den Rippen 4 und Bügeln 7 des Halteteils 3 und der Unterseite des Kopfteils 2 ein im wesentlichen im Querschnitt rechteckiger Zwischenbereich 10 liegt. Dieser Zwischenbereich ist jeweils so gestaltet, daß er im Querschnitt an eine Trägeröffnung eingepaßt ist. Auf den gegenüberliegenden längeren Seiten dieses Zwischenbereiches 10 ist jeweils mittig ein sich längs er-streckender Steg 11 angeordnet, welcher sich in einer nicht näher dargestellten, im wesentlichen rechteckigen Öffnung eines Trägers einlagert.

Der Kopfteil 2 ist als Halterung für einen nicht näher dargestellten leistenartigen Gegenstand, beispielsweise einer Zierleiste, ausgebildet. Hierzu besteht der Kopfteil 2 aus einer sich an den Zwischenbereich anschließenden Grundplatte 12 und einer darauf angeordneten, umgekehrt U-förmig ausgebildeten Abschlußplatte 13 mit seitlich über stehenden Stegen 14 auf beiden Seiten. Aus Fig. 2 ist ersichtlich, daß die Breite b der Stege 14 kleiner als die Breite B der Grundplatte ist. Damit läßt sich eine nicht näher dargestellte Zierleiste von oben einklippen, so daß die entsprechenden Schenkel in die Zwischenräume 15 des Halteelements nach Fig. 2 einrasten können. Die Schenkel können auch beliebig andere Form aufweisen, um entsprechend gestaltete Zierleisten oder andere Elemente haltern zu können.

Um die Halterung eines derartigen leistenartigen Gegenstandes an dem erfindungsgemäßen Befestigungselement 1 zu verbessern, kann die Grundplatte 12 nach Fig. 1 und 2 im mittleren Bereich, den Stegen 14 gegenüberliegen, mindestens eine federnde Zone 16 mit einem gegen den Steg 14 gerichteten Vorsprung 17 aufweisen. Hierbei ist bei der Ausführungsform nach Fig. 1 und 2 der Vorsprung 17 dreieckig ausgebildet. Es besteht auch die Möglichkeit der balligen Ausbildung je nach Toleranz und Montageerfordernis. Um die elastische Wirkung der federnden Zone 16 auf einfache Weise zu erreichen, befindet sich jeweils zwischen den Seitenbereichen 18 der Grundplatte 12 und der federnden Zone 16 nach Fig. 1 ein Spalt 19, so daß die federnde Zone 16 die erforderliche Elastizität besitzt.

Bei der Ausführungsform nach Fig. 1 und 2 weist die Grundplatte 12 auf beiden Seiten, den jeweiligen Stegen 14 gegenüberliegend, eine federnde Zone 16 mit dem dreieckigen Vorsprung 17 auf. Wie ersichtlich, ist bei diesem Ausführungsbeispiel nach Fig. 1 und 2 der Kopfteil 2 im rechten Winkel zu dem Zwischenbereich 10 bzw. zu dem Halteteil 3 angeordnet. Damit liegen ein nicht näher dargestellter Träger und die ebenfalls nicht näher dargestellte Zierleiste im wesentlichen parallel und werden durch das erfindungsgemäße Befestigungselement über das Kopfteil 2 und das Halteteil 3 miteinander verbunden.

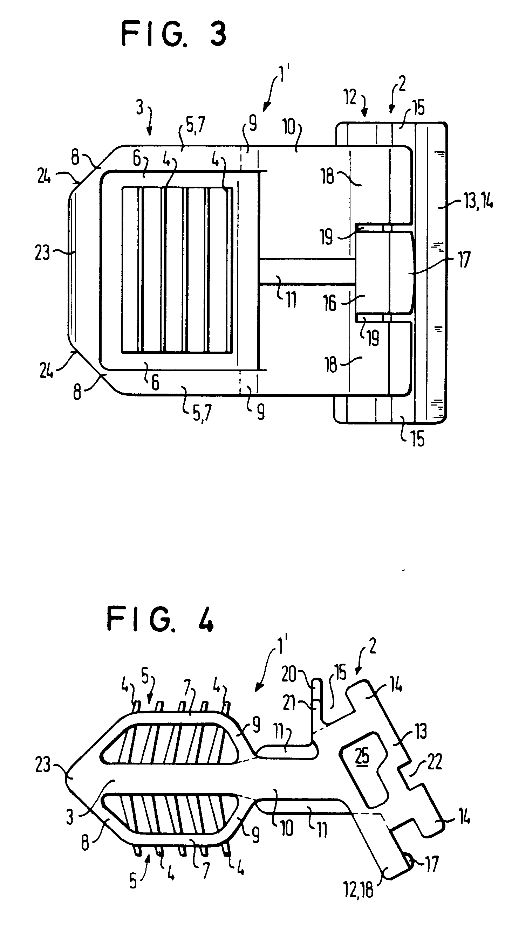

Bei dem Ausführungsbeispiel nach Fig. 3 und 4 ist das Befestigungselement 1′ so gestaltet, daß der Kopfteil 2 im schrägen Winkel zu dem Zwischenbereich 10 liegt. Hierdurch läßt sich eine entsprechend geformte Zierleiste ebenfalls im Winkel an einem Träger befestigen. Wiederum weist dieses erfindungsgemäße Befestigungselement 1′ federnde Bügel 7 auf, wobei die Anfangsbereiche 8 zweier, auf verschiedenen Seiten des Halbteils 3 einander gegenüberliegender federnder Bügel 7 zueinander schräg angeordnet sind. Sie gehen in einen konisch zulaufenden Einschubbereich 23 mit schrägen Seitenflächen 24 über. Die Bügel 7 besitzen wiederum eine durchgehend gleiche Wandstärke, wobei ebenfalls die Endbereiche 9 der gegenüberliegenden Bügel 7 schräg zueinander angeordnet sind.

An den Halteteil 3 schließt sich ein im Querschnitt rechteckiger Zwischenbereich 10 an, welcher wiederum auf den gegenüberliegenden längeren Seiten mit einem sich längs erstreckenden Steg versehen ist.

Der Kopfteil 2 besteht - analog der Bauform nach Fig. 1 und 2 - aus einer sich an den Zwischenbereich 10 anschließenden Grundplatte 12 und einer daran angeordneten, umgekehrt im wesentlich U-förmig ausgebildeten Abschlußplatte 13 mit seitlich überstehenden Stegen 14. Analog der Bauform nach Fig. 1 und 2 ist auch hier die Breite der Stege geringer als die Breite der Grundplatte.

Bei der Ausführungsform nach Fig. 3 und 4 weist die Grundplatte 12 nur auf der am höchsten liegenden Seite die federnde Zone 16 mit einem Vorsprung 17 auf, welche in diesem Fall beispielsweise gewölbt ausgebildet sein kann, entsprechend Fig. 3. Zwischen der federnden Zone 16 und den anschließenden Bereichen der Grundplatte liegt wiederum ein Spalt 19, um die Federwirkung der federnden Zone 16 auf einfache Weise zu gewährleisten.

Die tieferliegende Seite der Grundplatte 12 ist nach Fig. 4 im mittleren Bereich mit einer federnden, gegen die Unterseite des benachbarten Steges 14 gerichteten Zunge 20 versehen, wobei an die federnde Zunge 20 beidseitig federnde Bereiche 21 der Grundplatte anschließen. Durch diese asymmetrische Gestaltung mit federnder Zunge 20 auf der einen Seite und mit federnder Zunge 16 auf der anderen Seite des Kopfteils 2 ein funktionsrichtiger Zusammenbau mit einer nicht näher dargestellten Zierleiste gewährleistet. Durch diese besondere Gestaltung läßt sich die Zierleiste nur in einer ganz bestimmten Weise mit dem erfindungsgemäßen Befestigungselement 1 verbinden, so daß hierdurch ein funktionsrichtiger Einbau in einer im wesentlichen rechteckigen Öffnung eines nicht näher dargestellten Trägers gegeben ist.

Zwischen der Abschlußplatte 13 und der Grundplatte 12 befindet sich, analog der Bauform nach Fig. 1 und 2 ein Zwischenraum 25, um eine gewisse Elastizität zu gewährleisten und andererseits eine Materialeinsparung zu erzielen. Bei der Ausführungsform nach Fig. 3 und 4 weist die Abschlußplatte 13 im oberen Bereich eine sich längs erstreckende Nut 22 auf, welche ebenfalls zur Führung und zum funktionsrichtigen Einbau einer nicht näher dargestellten Zierleiste verwendet werden kann. Durch besondere Gestaltung des Zwischenraums 15 läßt sich ebenfalls eine Verdrehsicherung erreichen, so daß die Nut 22 entfallen könnte.

Durch die besondere Gestaltung des Befestigungselements mit den federnden Bügeln 7 und dem speziell gestalteten Kopfteil wird eine Konstruktion geschaffen, welche es ermöglicht, beispielsweise eine Zierleiste an einem Kraftfahrzeug auch dann in einer im wesentlichen rechteckigen Öffnung eines Trägers zu montieren, wenn diese Öffnung einen größeren Toleranzbereich aufweist. Durch die besondere Gestaltung des Kopfteils wird die entsprechende Zierleiste funktionssicher an dem Befestigungselement angebracht, wobei, speziell bei der Bauform nach Fig. 3 und 4, eine falscher Einbau bzw. eine falsche Verbindung mit der Zierleiste einwandfrei vermieden wird.

## Patentansprüche

1. Befestigungselement aus Kunststoff, zum Einbau in eine im wesentlichen rechteckige Öffnung eines Trägers, mit einem Kopfteil, einem daran anschließenden, im wesentlichen im Querschnitt rechteckigen Halteteil mit lamellenförmigen Rippen auf gegenüberliegenden längeren Seiten des Halteteils, welche jeweils im Randbereich durch einen sich längs des Halteteils erstreckenden Steg begrenzt sind, dadurch gekennzeichnet,
daß die Stege (5) jeweils als federnde Bügel (7) ausgebildet,
daß die Anfangsbereiche (8) zweier, auf verschiedenen Seiten des Halteteils (3) einander gegenüberliegender Bügel (7) schräg zueinander angeordnet sind und in einen konisch zulaufenden Einschubbereich (23) mit schrägen Seitenflächen (24) übergehen und
daß der Kopfteil (2) als Halterung für einen leistenartigen Gegenstand ausgebildet ist.

2. Befestigungselement nach Anspruch 1, dadurch gekennzeichnet, daß die Endbereiche (9) der gegenüberliegenden Bügel (7) schräg zueinander angeordnet sind.

3. Befestigungselement nach Anspruch 1 und 2, dadurch gekennzeichnet, daß die Bügel (7) eine durchgehend gleiche oder unterschiedliche Wandstärken aufweisen.

4. Befestigungselement nach einem der vorhergehenden Ansprüche, dadurch gekennzeichnet, daß zwischen den Rippen (4) und Bügel (7) des Halteteils (3) und der Unterseite des Kopfteils (2) ein an eine Trägeröffnung im Querschnitt angepaßter Zwischenbereich (10) liegt.

5. Befestigungselement nach Anspruch 4, dadurch gekennzeichnet, daß auf den gegenüberliegenden längeren Seiten des Zwischenbereichs (10) jeweils mindestens ein sich längs erstreckender Steg (11) angeordnet ist.

6. Befestigungselement nach einem der vorhergehenden Ansprüche, dadurch gekennzeichnet, daß der Kopfteil (2) aus einer sich an den Zwischenbereich (10) anschließenden Grundplatte (12) und einer darauf angeordneten, umgekehrt U-förmig ausgebildeten Abschlußplatte (13) mit seitlich überstehenden Stegen (14) besteht.

7. Befestigungselement nach Anspruch 6, dadurch gekennzeichnet, daß die Breite (b) der Stege (14) kleiner als die Breite (B) der Grundplatte (12) ist.

8. Befestigungselement nach Anspruch 6 und 7, dadurch gekennzeichnet, daß die Grundplatte (12) im mittleren Bereich - den Stegen (14) gegenüberliegend - mindestens eine federnde Zone (16) aufweist.

9. Befestigungselement nach Anspruch 8, dadurch gekennzeichnet, daß die federnde Zone (16) einen gegen den Steg (14) gerichteten Vorsprung (17) aufweist.

10. Befestigungselement nach Anspruch 9, dadurch gekennzeichnet, daß der Vorsprung (17) dreieckig ausgebildet ist.

11. Befestigungselement nach Anspruch 8 bis 10, dadurch gekennzeichnet, daß zwischen Seitenbereichen (18) der Grundplatte (12) und der federnden Zone (16) mit dem dreieckigen Vorsprung (17) jeweils ein Spalt (19) verläuft.

12. Befestigungselement nach Anspruch 8 bis 11, dadurch gekennzeichnet, daß die Grundplatte (12) auf beiden Seiten, den jeweiligen Stegen (14) gegenüberliegend, eine federnde Zone (16) mit dreieckigem oder balligem Vorsprung (17) aufweist.

13. Befestigungselement nach Anspruch 1 bis 11, dadurch gekennzeichnet, daß der Kopfteil (2) im schrägen Winkel zu dem Zwischenbereich (6) liegt (Fig. 3, 4).

14. Befestigungselement nach Anspruch 13, dadurch gekennzeichnet, daß die Grundplatte (12) nur auf der am höchsten liegenden Seite die federnde Zone (16) mit dreieckigem Vorsprung (17) aufweist.

15. Befestigungselement nach Anspruch 13 und 14, dadurch gekennzeichnet, daß die tieferliegende Seite der Grundplatte (12) im mittleren Bereich eine federnde, gegen die Unterseite des benachbarten Steges (14) gerichtete Zunge (20) aufweist.

16. Befestigungselement nach Anspruch 15, dadurch gekennzeichnet, daß an die federnde Zunge (20) beidseitig federnde Bereiche (21) der Grundplatte (12) anschließen.

17. Befestigungselement nach einem der Ansprüche 13 bis 16, dadurch gekennzeichnet, daß die Oberseite der Abschlußplatte (13) des Kopfteils (2) eine sich längs erstreckende Nut (22) aufweist.

## Claims

1. Fastening element of plastics material for fitting into a substantially rectangular opening in a carrier, said element comprising a head part, and a holding part adjoining the latter, having a substantially rectangular cross-section and provided with lanellar ribs which are disposed on opposite longer sides of the holding part and each of which is bounded in the edge region by a web extending along the holding part, characterised in that each of the webs (5) is in the form of a spring bow (7), in that the starting regions (8) of two bows (7) lying opposite one another on different sides of the holding part (3) are disposed obliquely relative to one another and merge into a conically tapering insertion region (23) having oblique side surfaces (24), and in that the head part (2) is in the form of a mounting for a strip-like object.

2. Fastening element according to Claim 1, characterised in that the end regions (9) of the bows (7 lying opposite one another are disposed obliquely relative to each other.

3. Fastening element according to Claims 1 and 2, characterised in that the bows (7) have the same wall thickness throughout or different wall thicknesses.

4. Fastening element according to one of the preceding claims, characterised in that an intermediate region (10) whose cross-section matches that of a carrier opening lies between the ribs (4) and bow (7) of the holding part (3) and the underside of the head part (2).

5. Fastening element according to Claim 4, characterised in that on each of the oppositely situated longer sides of the intermediate region (10) at least one web (11) extending longitudinally is disposed.

6. Fastening element according to one of the preceding claims, characterised in that the head part (2) consists of a base plate (12) adjoining the intermediate region (10) and of a closing plate (13) which is disposed thereon and has an inverted U-shape and which is provided with laterally projecting webs (14)).

7. Fastening element according to Claim 6, characterised in that the width (b) of the webs (14) is smaller the width (B) of the base plate (12).

8. Fastening element according to Claims 6 and 7, characterised in that in the middle region, lying opposite the webs (14), the base plate (12) has at least one resilient zone (16).

9. Fastening element according to Claim 8, characterised in that the resilient zone (16) has a projection (17) directed towards the web (14).

10. Fastening element according to Claim 9, characterised in that the projection (17) is triangular in shape.

11. Fastening element according to Claims 8 to 10, characterised in that a gap (19) extends between each of the side regions (18) of the base plate (12) and the resilient zone (16) provided with the triangular projection (17).

12. Fastening element according to Claims 8 to 11, characterised in that on both sides lying opposite the respective webs (14) the base plate (12) has a resilient zone (16) provided with a triangular or dome-shaped projection (17).

13. Fastening element according to Claims 1 to 11, characterised in that the head part (2) lies at an oblique angle to the intermediate region (6) (Figures 3 and 4).

14. Fastening element according to Claim 13, characterised in that the base plate (12) is provided only on the side in the highest position with the resilient zone (16) having a triangular projection (17).

15. Fastening element according to Claims 13 and 14, characterised in that the side of the base plate (12) in the lower position has in its middle region a resilient tongue (20) directed towards the underside of the neighbouring web (14).

16. Fastening element according to Claim 15, characterised in that resilient regions (21) of the base plate (12) adjoin the resilient tongue (20) on both sides.

17. Fastening element according to one of Claims 13 to 16, characterised in that the upper side of the closing plate (13) of the head part (2) has a groove (22) extending longitudinally.

## Revendications

1. Dispositif de fixation en matière plastique conçu pour être intégré dans un orifice pour l'essentiel rectangulaire, pratiqué dans un support, comprenant une partie frontale et une partie de retenue se rattachant à cette dernière et présentant une section transversale pour l'essentiel rectangulaire, avec des nervures en forme de lamelles qui sont situées sur des côtés longs opposés de la partie de retenue et sont respectivement délimitées, dans la région marginale, par une membrure s'étendant le long de la partie de retenue, caractérisé par le fait
que les membrures (5) sont respectivement réalisées sous la forme d'étriers élastiques (7) ;
que les zones initiales (8) de deux étriers (7), opposés l'un à l'autre sur des côtés différents de la partie de retenue (3), sont agencées mutuellement à l'oblique et fusionnent dans une zone d'insertion (23) à terminaison conique, pourvue de surfaces latérales inclinées (24) ; et
que la partie frontale (2) est réalisée en tant que pièce de retenue pour un objet en forme de barrette.

2. Dispositif de fixation selon la revendication 1, caractérisé par le fait que les zones terminales (9) des étriers opposés (7) sont agencées mutuellement à l'oblique.

3. Dispositif de fixation selon les revendications 1 et 2, caractérisé par le fait que les étriers (7) présentent une épaisseur de paroi identique sans discontinuité, ou des épaisseurs de paroi différentes.

4. Dispositif de fixation selon l'une des revendications précédentes, caractérisé par le fait qu'une zone intercalaire (10), dont la section transversale est adaptée à un orifice d'un support, se trouve entre la face inférieure de la partie frontale (2) et les nervures (4) et l'étrier (7) de la partie de retenue (3).

5. Dispositif de fixation selon la revendication 4, caractérisé par le fait qu'au moins une membrure respective (11), s'étendant longitudinalement, est disposée sur les côtés longs opposés de la zone intercalaire (10).

6. Dispositif de fixation selon l'une des revendications précédentes, caractérisé par le fait que la partie frontale (2) se compose d'une plaque de base (12) se rattachant à la zone intercalaire (10), et d'une plaque de terminaison (13) disposée sur ladite plaque, réalisée de configuration en U inversé et dotée de membrures (14) saillant latéralement.

7. Dispositif de fixation selon la revendication 6, caractérisé par le fait que la largeur (b) des membrures (14) est plus petite que la largeur (B) de la plaque de base (12).

8. Dispositif de fixation selon les revendications 6 et 7, caractérisé par le fait que la plaque de base (12) présente au moins une zone élastique (16) dans la région centrale - à l'opposé des membrures (14) -.

9. Dispositif de fixation selon la revendication 8, caractérisé par le fait que la zone élastique (16) présente une saillie (17) orientée vers la membrure (14).

10. Dispositif de fixation selon la revendication 9, caractérisé par le fait que la saillie (17) est de réalisation triangulaire.

11. Dispositif de fixation selon les revendications 8 à 10, caractérisé par le fait qu'un interstice respectif (19) se trouve entre des régions latérales (18) de la plaque de base (12), et la zone élastique (16) munie de la saillie triangulaire (17).

12. Dispositif de fixation selon les revendications 8 à 11, caractérisé par le fait que la plaque de base (12) présente des deux côtés, à l'opposé des membrures (14) considérées, une zone élastique (16) à saillie (17) triangulaire ou bombée.

13. Dispositif de fixation selon les revendications 1 à 11, caractérisé par le fait que la partie frontale (2) est agencée à l'oblique par rapport à la zone intercalaire (6) (figures 3, 4).

14. Dispositif de fixation selon la revendication 13, caractérisé par le fait que la plaque de base (12) présente, uniquement du côté occupant la position la plus haute, la zone élastique (16) à saillie triangulaire (17).

15. Dispositif de fixation selon les revendications 13 et 14, caractérisé par le fait que le côté de la plaque de base (12) occupant une position plus basse présente, dans la région centrale, une languette élastique (20) orientée vers la face inférieure de la membrure (14) voisine.

16. Dispositif de fixation selon la revendication 15, caractérisé par le fait que des régions élastiques (21) de la plaque de base (12) se rattachent, de part et d'autre, à la languette élastique (20).

17. Dispositif de fixation selon l'une des revendications 13 à 16, caractérisé par le fait que la face supérieure de la plaque de terminaison (13) de la partie frontale (2) présente une gorge (22) s'étendant longitudinalement.
